**Europäisches Patentamt**

**European Patent Office**

**Office européen des brevets**

(11) Veröffentlichungsnummer: **0 251 008**

**A1**

## EUROPÄISCHE PATENTANMELDUNG

(21) Anmeldenummer: **87108586.6**

(22) Anmeldetag: **15.06.87**

(51) Int. Cl.⁴: **G01S 15/87 , G01S 7/52**

(30) Priorität: **03.07.86 DE 3622368**

(43) Veröffentlichungstag der Anmeldung:
**07.01.88 Patentblatt 88/01**

(84) Benannte Vertragsstaaten:
**AT BE DE ES FR GB IT NL SE**

(71) Anmelder: **Siemens Aktiengesellschaft Berlin und München**
**Wittelsbacherplatz 2**
**D-8000 München 2(DE)**

(72) Erfinder: **Wuttke, Gero**
**Eichendorffstrasse 54a**
**D-8400 Regensburg(DE)**

(54) **Anordnung zur Bestimmung der Lage eines bewegbaren Körpers mit Ultraschall.**

(57) Zur Bestimmung der Lage eines beweglichen Körpers (1) mit einem Reflektor (10) ist ein Hauptwandler (2) und ein Zusatzwandler (3) eingesetzt, die Ultraschallimpulse zum Reflektor (10) senden und die vom Reflektor (10) reflektierten Ultraschallimpulse wieder detektieren. Aus den Laufzeiten der Ultraschallimpulse ermittelt eine Meßeinrichtung (4) einen der Lage des Reflektors zugeordneten Lagewert. Hierzu hat die Meßeinrichtung (4) ein Hauptsteuerteil (46), an das ein Rechnerteil (47), ein Arbeitsspeicher (48), ein Zeitmesser (44) und ein Vorsteuerteil (45) gekoppelt sind. Zudem hat die Meßeinrichtung (4) eine Empfangsstufe (43), eine Sendestufe (42) und eine Umschalteinrichtung (41), die die Ultraschallwandler abwechselnd mit der Meßeinrichtung (4) verbindet.

EP 0 251 008 A1

## Anordnung zur Bestimmung der Lage eines bewegbaren Körpers mit Ultraschall

Die Erfindung betrifft eine Anordnung gemäß dem Oberbegriff von Anspruch 1.

Bei bekannten Anordnungen dieser Art wird als Lagewert der Hauptabstand zwischen einem Hauptwandler und einem Reflektor, der an einem Körper angebracht ist, durch die Messung der Laufzeit eines Ultraschallimpulses im Medium zwischen dem Hauptwandler und dem Reflektor - nachfolgend Hauptlaufzeit genannt - nach der folgenden Gleichung bestimmt:

$$L_1 = 1/2 \cdot t_1 \cdot v(\vartheta) \quad (1)$$

wobei $t_1$ die Hauptlaufzeit des Ultraschallimpulses, $v(\vartheta)$ die Fortpflanzungsgeschwindigkeit des Ultraschallimpulses im Medium, $L_1$ den Hauptabstand und $\vartheta$ die Temperatur bezeichnen.

Da die Fortpflanzungsgeschwindigkeit stark abhängig von der Temperatur des Mediums ist, muß zusätzlich die Temperatur des Mediums gemessen werden, um eine Temperaturkorrektur ausführen zu können. Hierzu wird ein Temperatursensor mit nachgeschalteter aufwendiger Meßelektronik verwendet.

Zudem ist die Fortpflanzungsgeschwindigkeit eine spezifische Funktion des Mediums mit der Konsequenz, daß für je des Medium eine Kennlinie oder eine Formel für die spezifische Fortpflanzungsgeschwindigkeit von der Meßelektronik ausgewertet werden muß. Die verwendete Meßelektronik wird bei den bekannten Anordnungen, also auf jedes Medium, technisch aufwendig angepaßt.

Die vorliegende Erfindung hat deshalb die Aufgabe, auf einfache Art und Weise, ohne Temperaturmessung, die Lage eines Reflektors mit Hilfe von Ultraschallimpulsen zuverlässig zu bestimmen.

Erfindungsgemäß wird diese Aufgabe durch die in Anspruch 1 gekennzeichnete Anordnung gelöst.

Der Erfindung liegt die Erkenntnis zugrunde, daß das Verhältnis aus dem Hauptabstand und dem Zusatzabstand nicht mehr von der temperaturabhängigen und medienspezifischen Fortpflanzungsgeschwindigkeit abhängt und nur durch den Quotienten der gemessenen Laufzeiten bestimmt ist:

$$\frac{L_1}{L_2} = \frac{t_1}{t_2} \quad (2)$$

Dabei bezeichnet $L_1$ den Hauptabstand, $L_2$ den Zusatzabstand, $t_1$ die Hauptlaufzeit und $t_2$ die Zusatzlaufzeit. Mit der Einführung des konstanten Gesamtabstandes g zwischen Haupt-und Zusatzwandler läßt sich nach kurzer Rechnung der Zusatz-oder Hauptabstand nach folgenden Gleichungen angeben, die nur noch von der Haupt-und Zusatzlaufzeit und dem konstanten Gesamtabstand g abhängen:

$$L_1 = \frac{t_1}{t_1 + t_2} \cdot g \quad (3)$$

$$L_2 = \frac{t_2}{t_1 + t_2} \cdot g \quad (4)$$

Aus den Gleichungen (3) und (4) kann ein die Lage des Reflektors bezeichnender Lagewert angegeben werden, also z.B. der Abstand des Reflektors von einer beliebigen Bezugslage. Diese Bezugslage kann zwischen dem Haupt-und Zusatzwandler oder im Bereich außerhalb des Haupt-und Zusatzwandlers liegen und markiert einen Nullpunkt, von dem aus der Lagewert positives oder negatives Vorzeichen, je nach Richtung der Abweichung vom Nullpunkt, annehmen kann.

Eine Weiterbildung der Erfindung ermöglicht es ferner, auch nach Ausfall eines der beiden Ultraschallwandler die Lage des Reflektors immer noch mit Hilfe des funktionierenden Ultraschallwandlers zu bestimmen. Dadurch bietet die erfindungsgemäße Anordnung eine erheblich erhöhte Sicherheit, die dem Anwender z.B. bei verfahrenstechnischen Einrichtungen zugutekommt.

Die Erfindung kann unter anderem in der Kraftfahrzeugtechnik, z.B. zur Feststellung von Spurstangen-Verstellungen der Lenkung oder zur Ermittlung der Eintauchtiefe bei Fahrzeugfederungen eingesetzt werden.

Aber auch die Werkzeugpositionierung elektrisch gesteuerter Werkzeugmaschinen oder die Durchlaßsteuerung bei einem Ventil in der Verfahrenstechnik kann mit Hilfe der Erfindung ermittelt werden.

Weitere vorteilhafte Ausgestaltungen der Erfindung sind in den Unteransprüchen gekennzeichnet.

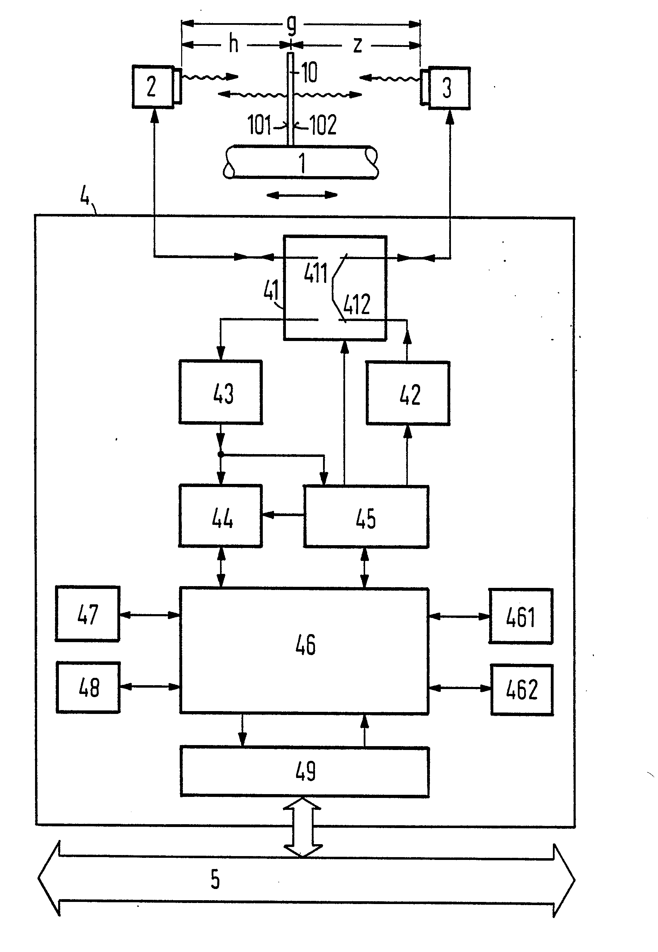

Im folgenden wird die Erfindung an einem Ausführungsbei spiel gemäß der schematischen Darstellung nach FIG 1 näher erläutert.

An einem beliebigen, bewegbaren Körper 1, dessen Abstand von einer Bezugslage zu bestimmen ist, ist ein Reflektor 10 befestigt, der eine ultraschallreflektierende Frontseite 101 und Rückseite 102 hat und der zwischen einem Hauptwandler 2 und einem Zusatzwandler 3 angeordnet ist. Als Hauptwandler 2 und Zusatzwandler 3 sind typgleiche, piezoelektrische Ultraschallwandler mit je einer Ultraschallemissionsebene eingesetzt, die mit Quarzkristallen arbeiten und sowohl Ultraschallimpulse senden als auch empfangen können.

Die Frontseite 101 des Reflektors 10 ist dem Hauptwandler 2 zugewandt und hat von ihm einen Hauptabstand h; seine Rückseite 102 ist auf den Zusatzwandler 3 gerichtet und hat von ihm den Zusatzabstand z. Die Frontseite 101 und Rückseite 102 des Reflektors 10 sind dabei parallel zu den Ultraschallemissionsebenen des Zusatzwandlers 3 und Hauptwandlers 2 ausgerichtet, damit der Weg, den die Ultraschallimpulse vom Hauptwandler 2 und Zusatzwandler 3 zum Reflektor 10 und zurück zurücklegen, nicht vom Hauptabstand h bzw. Zusatzabstand $\dot{z}$ abweicht.

Die vom Hauptwandler 2 und Zusatzwandler 3 emittierten Ultraschallimpulse haben eine Impulsdauer, die vernachlässigbar klein im Vergleich zur Haupt-bzw. Zusatzlaufzeit ist, um eine hohe Auflösung zu erreichen.

Hauptwandler 2 und Zusatzwandler 3 sind an eine Meßeinrichtung 4 angeschlossen, die eine Umschalteinrichtung 41, eine Sendestufe 42, eine Empfangsstufe 43, einen Zeitmesser 44, ein Vorsteuerteil 45, ein Hauptsteuerteil 46, eine Prüfeinrichtung 461, eine Notlaufeinrichtung 462, ein Rechnerteil 47, einen Arbeitsspeicher 48 und eine Ein-/Ausgabeeinheit 49 enthält.

Die Umschalteinrichtung 41 hat einen Auswahlumschalter 411, der in Serie mit einem Funktionsumschalter 412 liegt. Die Umschalter sind mit Schalttransistoren realisiert.

Der Auswahlumschalter 411 verbindet abwechselnd den Hauptwandler 2 und den Zusatzwandler 3 mit der Meßeinrichtung 4.

Der Funktionsumschalter 412 schaltet zwischen der Sendestufe 42 und der Empfangsstufe 43 um.

Die Sendestufe 42 der Meßeinrichtung 4 besteht aus einem Impulsgenerator mit Sendeverstärker, der die elektrischen Impulse für die elektroakustische Wandlung im Hauptwandler 2 oder Zusatzwandler 3 erzeugt.

Die Empfangsstufe 43 hat einen Empfangsverstärker mit Impulsformung zur weiteren Verarbeitung der von den Ultraschallwandlern abgegebenen elektrischen Impulse.

Das Vorsteuerteil 45 ist als Schaltwerk aufgebaut und steuert die Umschalteinrichtung 41. Zudem veranlaßt das Vorsteuerteil 45 auf Anweisung des Hauptsteuerteils 46 die Sendestufe 42 dazu, einen elektrischen Impuls zu senden, und startet gleichzeitig den Zeitmesser 44. Weiterhin ist das Vorsteuerteil 45 mit der Empfangsstufe 43 verbunden.

Der Zeitmesser 44 besteht aus einer integrierten Schaltung, einem programmierbaren Intervalltimer mit einem Zähler und hat die Aufgabe, die Hauptlaufzeit und Zusatzlaufzeit zu ermitteln.

Der Intervalltimer stellt die gemessenen Haupt-und Zusatzlaufzeiten auf Anforderung dem Hauptsteuerteil 46, an das er gekoppelt ist, zur Verfügung.

Der Rechnerteil 47 hat die Aufgabe, den Lagewert für die Lage des Reflektors 10 zwischen dem Hauptwandler 2 und dem Zusatzwandler 3, den Zusatzabstand z und den Hauptabstand h aus der gemessenen Haupt-und Zusatzlaufzeit, dem Gesamtabstand g und der definierten Bezugslage auf Anforderung des Hauptsteuerteils 46 zu ermitteln.

Die dafür benötigen, obengenannten Ausgangsgrößen erhält der Rechnerteil 47 von dem Hauptsteuerteil 46.

Im Arbeitsspeicher 48, der mit dem Hauptsteuerteil verbunden ist und z.B. ein RAM (Random Access Memory) sein kann, speichert das Hauptsteuerteil 46 die gemessenen Größen, wie Zusatz-und Hauptlaufzeit, und die berechneten Größen, wie den Zusatzabstand z, den Hauptabstand h und den Lagewert aber auch den konstanten Gesamtabstand g und die festgelegte Bezugslage ab.

Das Hauptsteuerteil 46 ist als Schaltwerk aufgebaut und mit dem Vorsteuerteil 45, dem Zeitmesser 44, dem Rechnerteil 47 und dem Speicher 48 verbunden, von denen es die abgelegten Daten bei Bedarf abruft. Zudem ist das Hauptsteuerteil 46 über eine Ein-/Ausgabeeinheit 49 zum Austausch von Informationen mit einer Anschlußeinheit 5 verbunden, die als Bus mit Daten-, Adreß-und Steuerleitungen ausgeführt sein kann.

Das Hauptsteuerteil 46 koordiniert einen Meßzyklus, der nach folgendem Schema ablaufen kann:

Das Hauptsteuerteil 46 gibt an das Vorsteuerteil 45 den Startbefehl für die Messung der Hauptlaufzeit aus. Das Vorsteuerteil 45 steuert daraufhin die Umschalteinrichtung 41 an, in der der Auswahlumschalter 411 auf den Hauptwandler 2 und der Funktionsumschalter 412 auf die Sendestufe 42 umgeschaltet wird, um den Hauptwandler 2 mit der Sendestufe 42 zu verbinden.

Anschließend steuert das Vorsteuerteil 45 die Sendestufe 42 an, die daraufhin einen elektrischen Impuls an den Hauptwandler 2 abgibt, der einen Ultraschallimpuls emittiert. Gleichzeitig startet das Vorsteuerteil 45 den Zeitmesser 44.

Mit kurzer Verzögerung steuert das Vorsteuerteil 45 die Umschalteinrichtung 41 an, in der der Funktionsumschalter 412 jetzt auf die Empfangsstufe 43 umgeschaltet wird. Der Hauptwandler 2 empfängt den reflektierten Ultraschallimpuls und gibt einen elektrischen Impuls an die Empfangsstufe 43 ab, die daraufhin den Zeitmesser 44 stoppt und dem Vorsteuerteil 45 den Empfang eines Impulses anzeigt. Der Zeitmesser 44 teilt dem Hauptsteuerteil 46 mit, daß es das Meßergebnis (Hauptlaufzeit) abrufen kann. Daraufhin übernimmt das Hauptsteuerteil 46 den Wert für die Hauptlaufzeit, setzt den Zeitmesser 44 zurück und speichert den Wert der Hauptlaufzeit im Arbeitsspeicher 48 ab.

Anschließend gibt das Hauptsteuerteil 46 einen weiteren Startbefehl an das Vorsteuerteil 46 aus.

Im Meßzyklus folgt die Ermittlung der Zusatzlaufzeit. Hierzu verbindet jetzt die Umschalteinrichtung 41 den Zusatzwandler 3 mit der Meßeinrichtung 4 und die Zusatzlaufzeit wird gemessen und abgespeichert, alles in derselben Weise, wie es im Zusammenhang mit dem Hauptwandler 2 erläutert wurde.

Das Hauptsteuerteil 46 beauftragt nun den Rechnerteil 47, den Lagewert $L_x$ gemäß einer aus den Ausdrücken (3) und (4) abgeleiteten Gleichung (5) zu ermitteln:

$$L_x = \frac{t_1 - t_2}{t_1 + t_2} \cdot \frac{g}{2} \qquad (5)$$

Dabei ist vorausgesetzt, daß die Bezugslage genau in der Mitte zwischen dem Hauptwandler 2 und dem Zusatzwandler 3 liegt.

Mit Ausgabe des Lagewerts an das Hauptsteuerteil 46 ist ein Meßzyklus abgeschlossen. Das Hauptsteuerteil 46 kann dann den Lagewert über die Ein-/Ausgabeeinheit 49 an eine Anschlußeinheit 5 ausgeben.

Das Hauptsteuerteil 46 hat zusätzlich die Prüfeinrichtung 461, die anhand der gemessenen Haupt-und Zusatzlaufzeit Hauptwandler 2 und Zusatzwandler 3 auf Funktionsfähigkeit überprüft. Dazu bildet die Prüfeinrichtung 461 den Hauptabstand h und den Zusatzabstand z nach den Gleichungen (3) und (4) und vergleicht die Summe der beiden Abstände mit dem Gesamtabstand g.

Alternativ dazu kann die Prüfeinrichtung 461 auch die Summe der Laufzeiten auswerten, die - bei funktionierenden Wandlern - trotz Temperaturfehler in einem begrenzten Bereich liegen muß.

Stellt die Prüfeinrichtung 461 fest, daß entweder der Hauptwandler 2 oder der Zusatzwandler 3 defekt ist, meldet sie dies dem Hauptsteuerteil 46, das daraufhin eine Modifikation des Meßzyklus vornimmt. Hierzu hat das Hauptsteuerteil 46 die Notlaufeinrichtung 462, die die im Arbeitsspeicher 48 abgelegten Speicherwerte für die Zusatz-und Hauptlaufzeit des vorhergehenden unmodifizierten Meßzyklus zu einer Referenzzeit aufsummiert, die ebenfalls im Arbeitsspeicher 48 abgelegt ist.

Die Notlaufeinrichtung 462 beauftragt in den folgenden modifizierten Meßzyklen den Rechnerteil 47, den Lagewert für die Lage des Reflektors 10 nach der modifizierten Formel (6) aus der Referenzzeit, der Haupt- oder Zusatzlaufzeit - die dem noch funktionsfähigen Ultraschallwandler zugeordnet ist -, dem Gesamtabstand g und der definierten Bezugslage zu ermitteln:

$$L_x = \frac{t_0 - 2t_2}{t_0} \cdot \frac{g}{2} \qquad (6)$$

In dieser Form gilt Gleichung (6), wenn der Zusatzwandler 3 noch funktionsfähig ist; $t_0$ bedeutet die Referenzzeit.

Wird der Lagewert nach Gleichung (6) bestimmt, liegt keine Temperatorkompensation mehr vor, der Lagewert ist also mit einem Temperaturfehler behaftet. Dies kann das Hauptsteuerteil 46 über die Ein-/Ausgabeeinheit 49 der Anschlußeinheit 5 mitteilen.

Über die Eingabeeinheit 49 kann die Anschlußeinheit 5 dem Hauptsteuerteil 46 z.B. angeben, welche Bezugslage einzustellen ist.

Als Hauptsteuerteil 46 kann ein schneller Ein-Chip-Mikrocomputer verwendet sein, der zusätzlich die Funktion des Rechnerteils 47, des Arbeitsspeichers 48, der Prüfeinrichtung 461, der Notlaufeinrichtung 462, des Zeitmessers 44 und der Ein-/Ausgabeeinheit 49 beinhaltet. Die Funktionen der Prüfeinrichtung 461 und der Notlaufeinrichtung 462 können als Unterprogramme eines übergeordneten Hauptprogramms, das der Steuerung des Meßzyklus zugrundeliegt, im Ein-Chip-Mikrocomputer implementiert sein.

Bezugszeichenliste / Spezialbegriffe

1 Körper
10 Reflektor
101 Frontseite
102 Rückseite
2 Hauptwandler
Hauptlaufzeit
h Hauptabstand
3 Zusatzwandler
z Zusatzabstand
Zusatzlaufzeit
g Gesamtabstand
Lagewert
Bezugslage
Bezugsabstand
4 Meßeinrichtung
41 Umschalteinrichtung
411 Auswahlumschalter
412 Funktionsumschalter
42 Sendestufe
43 Empfangsstufe
44 Zeitmesser
45 Vorsteuerteil
46 Hauptsteuerteil
461 Prüfeinrichtung
462 Notlaufeinrichtung
47 Rechnerteil
48 Arbeitsspeicher
49 Ein-/Ausgabeeinheit
5 Anschlußeinheit

**Ansprüche**

1. Anordnung zur Bestimmung der Lage eines bewegbaren Körpers (1) mit Ultraschall,
-mit einem Hauptwandler (2), der als Sender und Empfänger für Ultraschallimpulse dient,
-mit einem am Körper (1) angebrachten Reflektor (10) mit einer reflektierenden Frontseite (101) und Rückseite (102), der einen vom Hauptwandler (2) gesendeten Ultraschallimpuls in Richtung des Hauptwandlers (2), von seiner Frontseite (101) aus, zurückreflektiert,
-mit einer Meßeinrichtung (4), an die der Hauptwandler (2) angeschlossen ist und die pro Ultraschallimpuls eine Hauptlaufzeit ermittelt, die dieser Ultraschallimpuls vom Hauptwandler (2) zum Reflektor (10) und zurück, entlang eines Hauptabstandes (h) zwischen Hauptwandler (2) und Reflektor (10) benötigt, und die daraus einen Lagewert bestimmt, der die Lage des Reflektors (10) relativ zu einer Bezugslage mit einem Bezugsabstand vom Hauptwandler darstellt,
**dadurch gekennzeichnet,**
-daß ein Zusatzwandler (3) vorgesehen und an die Meßeinrichtung (4) angeschlossen ist, der wie der Hauptwandler (2) als Sender und Empfänger eines Ultraschallimpulses dient, der sich entlang eines Zusatzabstandes (z) vom Zusatzwandler (3) zur Rückseite (102) des Reflektors (10) und zurück mit einer Zusatzlaufzeit ausbreitet,
- daß der Reflektor (10) zwischen dem Hauptwandler (2) und dem Zusatzwandler (3) angeordnet ist,

5

-daß ein Gesamtabstand (g), der gleich der Summe aus Hauptabstand (h) und Zusatzabstand (z) ist, zwischen dem Hauptwandler (2) und dem Zusatzwandler (3) konstant ist,

-daß die Meßeinrichtung (4) die Zusatzlaufzeit ermittelt und aus der Zusatzlaufzeit, der Hauptlaufzeit, dem Gesamtabstand (g) und der Bezugslage den Lagewert bestimmt.

2. Anordnung nach Anspruch 1, **dadurch gekennzeichnet,** daß die Bezugslage einstellbar ist.

3. Anordnung nach Anspruch 2, **dadurch gekennzeichnet,** daß die Bezugslage in der Mitte zwischen dem Hauptwandler (2) und dem Zusatzwandler (3) liegt.

4. Anordnung nach einem der Ansprüche 1 bis 3, **dadurch gekennzeichnet,** daß die Meßeinrichtung (4) enthält:

-eine Umschalteinrichtung (41) mit einem Auswahlumschalter (411), der abwechselnd den Zusatzwandler (3) und den Hauptwandler (2) mit der Meßeinrichtung (4) verbindet, und mit einem Funktionsumschalter (412), der zyklisch zwischen einer Sendestufe (42) und einer Empfangsstufe (43) umschaltet,

-einen Zeitmesser (44), der die Haupt-und Zusatzlaufzeit mißt,

-ein Vorsteuerteil (45), das mit der Sendestufe (42), der Empfangsstufe (43), dem Zeitmesser (44) und der Umschalteinrichtung (41) verbunden ist, und Senden, Empfangen der Ultraschallimpulse sowie das Messen der Laufzeiten steuert,

- ein Hauptsteuerteil (46), an das das Vorsteuerteil (45), der Zeitmesser (44), ein Rechnerteil (47), ein Arbeitsspeicher (48) und eine Ein-/Ausgabeeinheit (49) angekoppelt sind und das die Ermittlung der Lagewerte aus den Laufzeiten steuert.

5. Anordnung nach Anspruch 4, **dadurch gekennzeichnet,** daß eine Prüfeinrichtung (461), die mit dem Hauptsteuerteil (46) verbunden ist, anhand der gemessenen Haupt-und Zusatzlaufzeit überprüft, ob Hauptwandler (2) und Zusatzwandler (3) funktionsfähig sind.

6. Anordnung nach Anspruch 5, **dadurch gekennzeichnet,** daß in dem Arbeitsspeicher (48) jeweils die beiden letzten Meßwerte für die Haupt-und Zusatzlaufzeit als Speicherwerte abgespeichert sind.

7. Anordnung nach Anspruch 6, **dadurch gekennzeichnet,** daß eine Notlaufeinrichtung (462) in der Meßeinrichtung (4) vorhanden ist, die durch Summation der Speicherwerte eine Referenzzeit ermittelt und die aus der gemessenen Haupt-oder Zusatzlaufzeit, dem Gesamtabstand (g), der Bezugslage und der Referenzzeit den Lagewert für die Lage des Reflektors (10) bestimmt, wenn die Prüfeinrichtung (461) den Ausfall des Hauptwandlers (2) oder des Zusatzwandlers (3) feststellt.

0 251 008

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-1 202 376  (AUTOMATION INDUSTRIES)<br>* Seite 1, Zeilen 12-54; Seite 2, Zeilen 49-105; Seite 3, Zeile 12 - Seite 4, Zeile 122; Figur 2 * | 1,2,3 | G 01 S   15/87<br>G 01 S   17/52 |
| Y | | 4 | |
| A | | 5 | |
| | --- | | |
| Y | DE-A-3 142 076  (BATTELLE)<br>* Seite 6, Zeilen 10-22; Seite 8, Zeile 1 - Seite 9, Zeile 3; Figur 1 * | 4 | |
| | --- | | RECHERCHIERTE SACHGEBIETE (Int. Cl.4) |
| A | US-A-3 757 285  (R.G. FERRE)<br>*  Spalte  1,  Zeilen  34-56; Zusammenfassung; Figur 1 * | 5,6 | |
| | --- | | G 01 S<br>G 01 B |
| A | FR-A-2 532 437  (COMMISSARIAT A L'ENERGIE ATOMIQUE)<br>*  Seite  8,  Patentanspruch  1; Figur 1 * | 1,4 | |
| | --- | | |
| A | US-A-3 944 963  (L.M. HIVELY)<br>* Spalte 8, Zeile 63 - Spalte  9, Zeile 33; Figur 6 * | 1,4 | |
| | ---                     -/- | | |

Der vorliegende Recherchenbericht wurde für alle Patentansprüche erstellt.

| Recherchenort | Abschlußdatum der Recherche | Prüfer |
|---|---|---|
| DEN HAAG | 12-10-1987 | VAN WEEL E.J.G. |

## EINSCHLÄGIGE DOKUMENTE .

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 181 114 (C.E. HALLMARK)<br>* Spalte 1, Zeilen 14-22; Spalte 2, Zeile 31 - Spalte 4, Zeile 7; Figur *<br><br>--- | 1,2 | |
| A | FR-A-2 428 263<br>(PRZEDSIEBIORSTWO)<br>* Seite 2, Zeile 9 - Seite 3, letzte Zeile; Figur 1 *<br><br>----- | 1 | |
| | | | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| DEN HAAG | 12-10-1987 | VAN WEEL E.J.G. |